# EUROPEAN PATENT SPECIFICATION

(11) **EP 3 273 505 B1**
(45) Date of publication and mention of the grant of the patent: **20.11.2019**
(21) Application number: 16180005.7
(22) Date of filing: 18.07.2016
(51) Int. Cl.: H01M 2/16, H01M 4/66, H01B 1/04, B32B 5/28, H01M 4/74

(54) **STRUCTURAL COMPONENT FORMING AN ELECTRICAL POWER SOURCE, STRUCTURAL COMPONENT WITH AN ELECTRICAL TRANSMISSION DEVICE, METHOD FOR PROVIDING A STRUCTURAL COMPONENT FORMING AN ELECTRICAL POWER SOURCE AND/OR AN ELECTRICAL TRANSMISSION DEVICE, ELECTRICAL WIRING SYSTEM AND AIRCRAFT COMPONENT**
BAUTEIL ZUR BILDUNG EINER ELEKTRISCHEN ENERGIEQUELLE, BAUTEIL MIT EINER ELEKTRISCHEN ÜBERTRAGUNGSVORRICHTUNG, VERFAHREN ZUR BEREITSTELLUNG EINES STRUKTURBAUTEILS ZUR BILDUNG EINER ELEKTRISCHEN STROMQUELLE UND/ODER EINER ELEKTRISCHEN ÜBERTRAGUNGSVORRICHTUNG, ELEKTRISCHES VERDRAHTUNGSSYSTEM UND FLUGZEUGKOMPONENTE
COMPOSANT STRUCTURAL FORMANT UNE SOURCE D'ALIMENTATION ÉLECTRIQUE, COMPOSANT STRUCTURAL D'UN DISPOSITIF DE TRANSMISSION ÉLECTRIQUE, PROCÉDÉ DE FOURNITURE D'UN COMPOSANT STRUCTURAL FORMANT UNE SOURCE D'ÉNERGIE ÉLECTRIQUE ET/OU DISPOSITIF DE TRANSMISSION ÉLECTRIQUE ET SYSTÈME DE CÂBLAGE ÉLECTRIQUE D'UN COMPOSANT D'AVION

(43) Date of publication of application: 24.01.2018
(73) Proprietor: Airbus Operations GmbH, 21129 Hamburg (DE)
(72) Inventor: LINDE, Peter, 21614 Buxtehude (DE); ASP, Leif, 43138 Mölndal (SE); ZENKERT, Dan, 18131 Lidingö (SE)
(74) Representative: Isarpatent

(56) References cited:
- EP-A1- 2 460 846
- US-A1- 2011 174 522
- ASP LEIF E ET AL: "Structural power composites", COMPOSITES SCIENCE AND TECHNOLOGY, ELSEVIER, AMSTERDAM, NL, vol. 101, 5 July 2014 (2014-07-05), pages 41-61, XP029046941, ISSN: 0266-3538, DOI: 10.1016/J.COMPSCITECH.2014.06.020
- LEIJONMARCK S ET AL: "Solid polymer electrolyte-coated carbon fibres for structural and novel micro batteries", COMPOSITES SCIENCE AND TECHNOLOGY, vol. 89, 2014, pages 149-157, XP028774652, ISSN: 0266-3538, DOI: 10.1016/J.COMPSCITECH.2013.09.026

## Description

### FIELD OF THE INVENTION

The present invention pertains to a structural component with an electrical transmission device, a method for providing a structural component with an electrical transmission device, and an aircraft component.

Although applicable for any kind of vehicle, the present invention and the corresponding underlying problems will be explained in further detail in conjunction with an aircraft component.

### BACKGROUND OF THE INVENTION

Present electrical wiring systems of aircrafts usually comprise a plurality of electrical wires in the form of single cables which are combined in a duct being coupled to a fuselage structure of the aircraft. These wiring systems are used for transmission of electrical power or data transmission. Accordingly, the aircraft data-transmission system is built up essentially of electrical wires that are placed separated from the cabin panels. These wires run in cable bundles, often jointly with power cables. Typically, each wire is solid and round and is supplied with insulation. Several such wires run together in cable bundles. Again, these bundles are fixed into their locations by means of brackets. The brackets are attached to cabin panels.

A so-called prepreg comprising resin and at least one fibre layer and further comprising an electrically insulating layer and an electrically conducting layer is known from US 2011/0174522A1, where the conductive layer is at or near the top surface, beneath that is the insulating layer and beneath that is a fibre/resin interleaf structure. Further, also EP 2460846 discloses a prepreg containing a carbon fiber and a thermosetting resin.

### SUMMARY OF THE INVENTION

It is one of the objects of the invention to provide a structural component, in particular structural component for an aircraft, with an electrical transmission device and an electrical wiring system which comprise a light weight structure and which can be installed in an easy and flexible manner, respectively.

At least some of these objects are achieved by the subject-matter of the respective independent claims. Advantageous embodiments are described in the subclaims related to the independent claims.

According to an aspect of the invention, a structural component comprises a composite laminate built up of a plurality of layers of carbon fibres, wherein the layers of carbon fibres are oriented in different directions and wherein the carbon fibres are surrounded by a conductive polymer resin, wherein the carbon fibres of at least one of the layers comprise an electrically insulating coating, and wherein at least one of the coated carbon fibres extend through its respective layer to form an electrical connection between ends of the layer spaced apart from one another.

Providing the structural component with coated carbon fibres provides a structural device with a functionality as an electrical transmitting means, in particular an electrical data transmission cable, which itself constitutes an integral part of the composite laminate while the structural component continues to maintain its original function, which is to carry a load. In other words, this constitutes some sort of a multifunctional cable.

In a preferred embodiment of the structural component, the electrically insulating coating of the carbon fibres is ion-transmissive.

According to one embodiment of the structural component stripped end portions of the at least one coated fibre protrude from its respective end of the layer easing the connection with at least one transmission means or its subset. In particular, the transmission means is formed by at least one electrical circuit, which is connectable to at least one power source and/or at least one signal processing device.

The use of a plurality of coated carbon fibres provided for electrical transmission provides the further advantage of redundancy.

Further, it is a particular advantage that these coated carbon fibres have very small diameters, which is in the order of some microns, preferred between 3 and 12 micrometers, in particular between 5 and 10 micrometers, because the cross section of an ordinary metallic signal cable is reduced drastically. In addition, a rubberized insulation is not used here, nor are the brackets to fasten cables.

Another aspect of the invention relates to a structural component wherein a composite laminate built up of a plurality of layers of carbon fibres forms a power source to drive electrical signals over at least one electrical connection formed by at least one coated carbon fibre extending through its layer between ends of the layer spaced apart from one another. According to this aspect, the simultaneous integration of a signal transmission capability with the electrical power function provided by a power source constituted by a composite battery is advantageously established, as both can be obtained from the same composite laminate. Accordingly, the structural component provides its structural function as well as data transmission and an electrical power source.

A further aspect of the invention relates to a method for providing a structural component, in particular a structural component according the preceding explanations comprising at least the providing of a composite laminate of carbon fibre layers with at least one of which layers containing carbon fibres coated with an electrically insulating coating, the manufacture of the structural component, the stripping of the insulation at opposite ends of at least one coated carbon fibre, connecting the stripped ends of the at least one carbon fibre with a signal processing means and/or a power source, transmitting signals or power.

The manufacture of the structural component is eased by a variant of the method, wherein the at least one coated carbon fibre is provided as a carbon fibre yarn or tow coated with an electrically insulating polymer electrolyte.

An advantageous variant of the method provides the use of digital data transmission, which may pass through several cables, whereby the data signals are coded as to which is the sender and for which receiver they are determined. In this manner an electrical redundancy can easily be achieved, if a damage occurs at one location. This redundancy is not necessarily given for today's common single metallic cables.

A further aspect of the invention relates to an electrical wiring system, extending along a structural component of an aircraft, wherein the electrical wires are formed by coated carbon fibres extending through at least one layer of a composite laminate of the structural component thereby providing a possibility to transport electrical signals along the structural component with little installation effort.

Another aspect of the invention concerns an aircraft, comprising a structural component with the composite laminate comprising a coated carbon fibre layer according to one of the embodiments described above . In particular, the structural component described above comprises a low weight per length due to the advantageous integration the electrical wiring in the component. Hence, the structural component may advantageously be integrated in an aircraft, i.e. as a data transmission line or an electrical supply line for electrical functional components arranged within the interior of a fuselage structure of an aircraft, i.e. lighting devices, pumps, or such like.

Generally, according to the present invention the structural component and its operating method advantageously provide the possibilities, that neither a separate manufacturing of electrical circuitry nor a separate installation of cable bundles is necessary, brackets to fasten cables can as well be avoided as any bonded power/data transmitting tapes or any ink-jet printed circuits. Additionally, no foreign objects are inserted into the sensitive laminate, such as copper cables, fibre optical cables etc., that may deteriorate the structural performance and can be cause for delaminations and cracks. Space requirements as well as weight are reduced, there exists a lower risk that cables or jet-ink circuits are torn apart or damaged during work and maintenance. Further, there is no risk of vibrating cables, and the efforts for inspection and maintenance are reduced significantly. If using digital data transmission with a plurality of fibres, a redundancy is achieved, not available for single metallic cables, which in particular constitutes an safety-improvement.
By means of integration with a composite power source separate power sources for signals are made unnecessary, while at the same time weight and space are saved and a lowered transmission loss occurs. This holds for a separate power source for steering signal devices made unnecessary as well as additional power cables as power is provided everywhere by means of integration with a composite power source. Finally there also exists the possibility to connect an arbitrary number of composite power source panels or cells for a tailored amount of voltage.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
- Fig. 1: schematically illustrates a well known structural component represented by a composite laminate panel built up from layers of carbon fibres;
- Fig. 2: shows the embodiment of Fig. 1 in greater detail as to observe single carbon fibres in a sectional view of a carbon fibre layer;
- Fig. 3: schematically illustrates an exemplary embodiment of a structural component according to the invention with a single layer of adjacent carbon fibres provided with a coating in a sectional view;
- Fig. 4: shows the embodiment of Fig.3 with one coated carbon fibre with a stripped end portion;
- Fig. 5: schematically illustrates a further exemplary embodiment of a structural component according to the invention with a composite laminate panel with coated fibres with one coated fibre protruding at opposite ends of a single layer;
- Fig. 6: shows the embodiment of Fig. 6 in greater detail with one of the protruding ends of the fibre with a stripped end portion;
- Fig. 7: schematically illustrates an exemplary embodiment of a structural component according to the invention with the composite laminate comprising carbon fibres serving as anodes, and a metal layer doped with an active cathode material serving as cathode, and one glass fibre layer serving as a separator between anodes and cathode;
- Fig. 8: schematically illustrates the integrated function of an exemplary embodiment of a structural component integrated signal transmission and composite power source.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

### DETAILED DESCRIPTION OF THE INVENTION

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

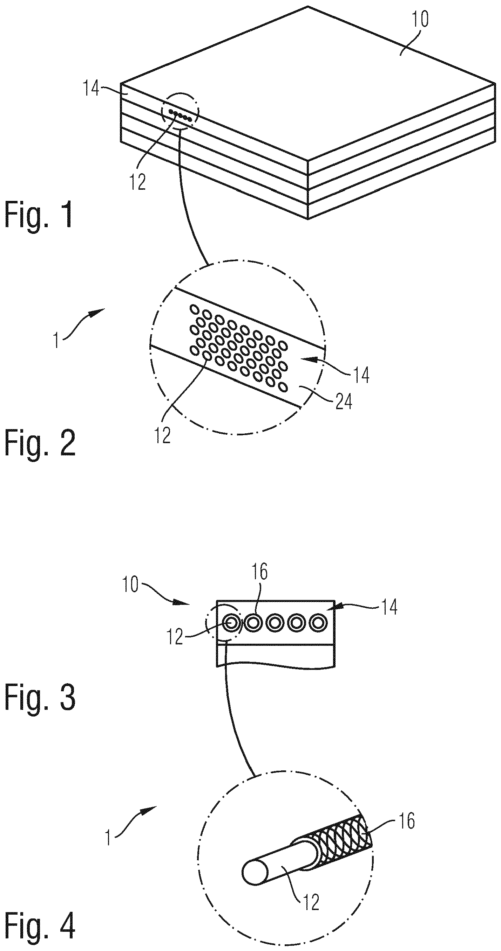

Figs. 1 and 2 show a structural element 1 as known in the art. Fig. 1 in particular shows a structural element 1 formed by a composite laminate 10 as seen in a sectional view built up of several layers of carbon fibres 12, also referred to as "plies". The plies are oriented in different directions. The fibres 12 are surrounded by polymer resin 14. This composite laminate 10 as part of a structural element 1 has structural capabilities and is able to carry a load not shown here.

Figs. 3 shows a structural element 1 according to the invention. Here, fibre coatings 16 surrounding the carbon fibres 12 provide an electrical insulation. Thus, for example, these coatings 16 can take over the insulating function of an insulation layer of the composite laminate 10 not shown here. This can result in a significant reduction of laminate thickness and by that provide a reduced weight and thinner thickness. Furthermore, the fibre coatings 16 are ion-transmissive to provide the capability to form a power source device 30 from the composite laminate 10, wherein the coated fibres 12 form a plurality of anodes 36.

Fig. 4 shows the embodiment of Fig.3 in greater detail with one coated carbon fibre 13 with a stripped end portion 22. Inside one can see graphitic carbon, with good electrical conduction properties, and on the outside is the electrically insulating coating 16. Thus, we now have a structural device with functionality as an electrical transmitting cable, e.g. a data transmitting cable, the cable being considerably smaller in diameter, in the order of some micrometer. Accordingly, figuratively spoken, the coated fibres 12 built an electrically charged "cable" extending through the structural component 1, which itself is additionally provided with electrically conducting capabilities and therefore is able to transport power or data in form of signals along its extension.

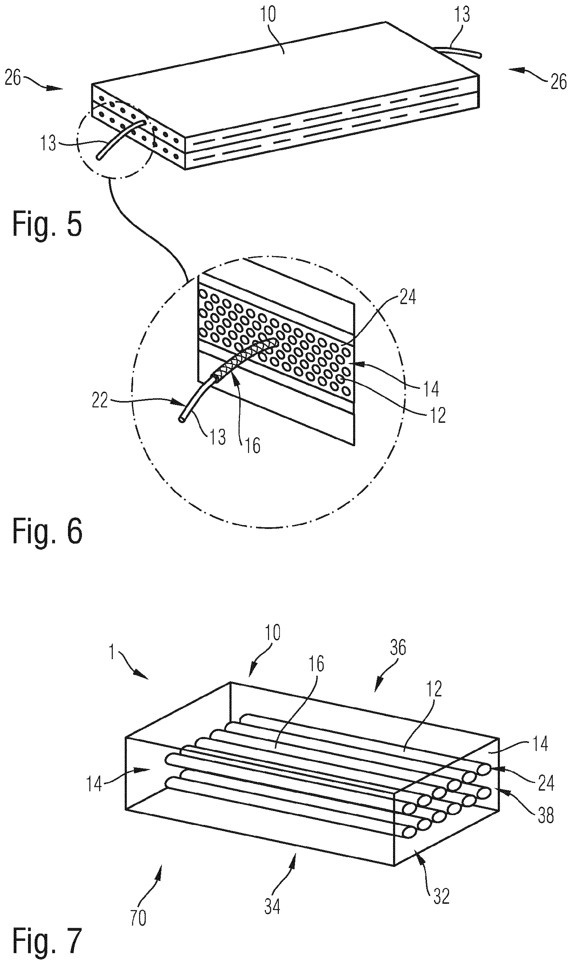

As best can be taken from Fig. 5, is the manner how to connect the "cable" formed by the coated carbon fibre 13 to an external source. Fig.5 schematically illustrates an exemplary embodiment of the structural element 1 with a composite laminate panel 10 with coated fibres 12 with one single coated fibre 13 protruding at opposite short ends 26 of a single layer 24 of the composite laminate panel 10. The coating 16 of the fibres 12 is provided ion-transmissive and electrically insulating.

Fig. 6 shows the respective layer in greater detail. One can extract form Fig. 6 a single carbon fibre 13 and its coating 16 protruding from the flat short end 26 of its layer 24. At its end portion 18, the coating 16 of the carbon fibre 13 was stripped in order to establish a conductive connection with a signal or power source not shown in Fig. 6.

Fig. 7 exemplarily shows electrical power function capability provided by the composite laminate 10 forming a power source device 30 as a type of a composite battery as to obtain electrical power from the composite laminate. The basis for the structural component 1 according to the invention, again, is formed by a composite laminate 10, such as extractable form Fig. 7. In the figure is seen a perspective view of a section of such a composite laminate 10, built up of several layers ("plies") of carbon fibres 12. The layers, again, are oriented in different directions and surrounded by polymer resin 14. At a lower portion of the composite laminate 10 one finds a metal layer 32 built by copper mesh forming a cathode 34, while at an upper portion of the composite laminate the carbon fibres 12 are disposed forming anodes 36. The cathode 34 and the anodes 36 are separated by an ion-transmissive separation means, which is formed by a glass fibre layer 38. This arrangement may represent the first stage of a composite battery as a power source 30.

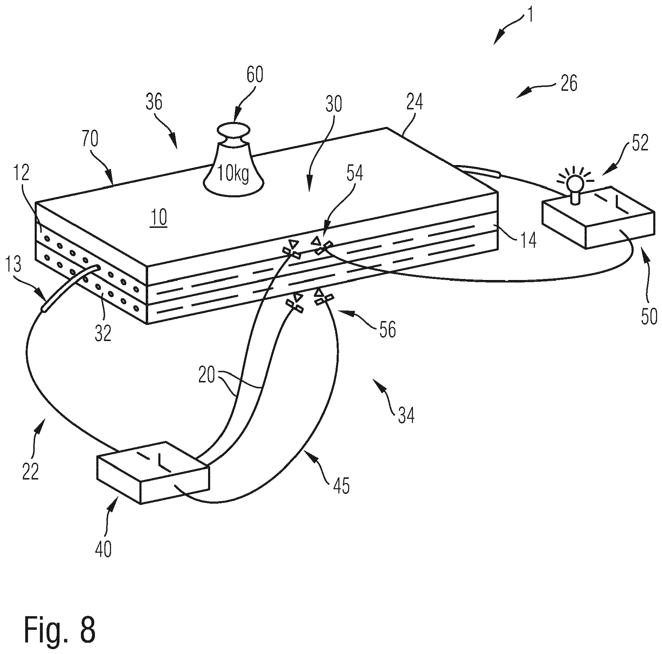

In Fig. 8 an exemplary embodiment of a structural element 1 is schematically illustrated, which shows the integrated functions of the composite laminate 10. One recognizes the same composite laminate 10 as in Fig. 6, now with the end portions 18 of the single carbon fibre 13 connected to an electric circuit 20 and a power source 30. At the left, one can see a signal sending device 40. With this signal sending device 40, signals transported along the single carbon fibre as a part of a signal circuit can be started and stopped. In order to electrically drive this device, it must in itself have a power source 30. On the right hand side of the composite laminate 10, a signal receiving device 50 is seen, that registers when a signal is being sent. Again, this device needs a power source 30.

The electrical current needed for signals to flow in the cable formed by the carbon fibres 12 is obtained from the composite power source 30. This power source 30 is formed by the layer of carbon fibres 12 building anodes 36 together with the metal layer 32 building the cathode 34 . Furthermore, the composite power source 30 provides power to the signal sending and receiving devices 40, 50, as well as to devices operated by their switching not shown here.

More specifically, most or all of the need for "power cables" disappear, when using the concept of composite power source 30. The reason is, that the composite power source 30 provides the power needed wherever the device is. Thus, no cable transmission losses will occur. Moreover, the only cable needed are the signal cables. But also for these applies that no separate signal cables will be necessary any more, since the built-in insulated carbon fibres 12 will serve this purpose.

One learns from Fig.8, that one single carbon fibre 13 of the many carbon fibres 12 in the composite laminate 10 carries out an electrical transmission function while all the other fibres 12 carry out its superficial function, which is to carry a load, symbolically depicted as a weight 60. Accordingly the composite laminate 10 functions structurally and is loaded by a weight, placed in a central position in the middle of the laminate 10. Together with a metal layer 32 provided with the composite laminate 10, the coated carbon fibres 12 furthermore provide an independent composite power source 30 to drive the transmission carried out along a signal circuit 45 by the single carbon fibre 13.

To conclude, the invention provides a structural component 1 comprising a composite laminate 10 with at least one layer 24 containing carbon fibres 12 coated with ion- transmissive and electrically insulating coating 16. To establish a transmission means a sending device 40 and a receiving device 50, preferably running an identical protocol are provided as well as an arbitrary device with electrical function. The composite laminate 10 shows further features, such as cathode, so as to enable electrical energy storage to operate the sending and receiving devices in collaboration with the coated fibres 12 forming anodes 36.

To operate the corresponding devices, the sending device 40 is connected to a coated carbon fibre 13 intended as a data transmitter at an end portion 22 stripped of coating 16, the receiving device 50 is connected to the carbon fibre 13 in similar manner, the receiving device 50 is further connected to an output device 52, represented by a lamp in Fig.8. Any or all signal cables and devices 13, 40, 50, 52, are connected, for integrated power, to positive and negative electrical connectors 54, 56 of electrical energy storing composite 70 which is formed by the power source 30 established by the composite laminate 10. Note, that different voltage may be used, either over a different number of cells, or with resistor built in circuit. After that, data may be sent from sending device 40.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference signs

- 1: structural component
- 10: composite laminate
- 12: carbon fibre
- 13: single carbon fibre serving as a cable
- 14: polymer resin
- 16: coating
- 18: end portion of carbon fibre
- 20: electric circuit
- 22: stripped end portion
- 24: layer
- 26: short end of layer
- 30: power source device
- 32: metal layer
- 34: cathode
- 36: anode
- 38: glass fibre layer
- 40: signal sending device
- 45: signal circuit
- 50: signal receiving device
- 52: output device
- 54: positive electrical connector
- 56: negative electrical connector
- 60: weight
- 70: electrical energy storing composite

## Claims

1. Structural component (1) comprising:
a composite laminate (10) built up of a plurality of layers (24) of carbon fibres (12), wherein the layers (24) of carbon fibres (12) are oriented in different directions and wherein the carbon fibres (12) are surrounded by a conductive polymer resin (14);
wherein the carbon fibres (12) of at least one of the layers (24) comprise an electrically insulating coating (16), and
wherein at least one of the coated carbon fibres (12) extend through its respective layer (24) to form an electrical connection between ends (26) of the layer (24) spaced apart from one another.

2. Structural component according to claim 1, wherein stripped end portions (22) of the at least one coated fibre (12) protrude from its respective end (26) of the layer (24) and are connectable or connected with at least one transmission means or its subset.

3. Structural component (1) according to claim 2, wherein the transmission means is formed by at least one electrical circuit (20), which is connectable to at least one power source (30) and/or at least one signal processing device.

4. Structural component (1) according to one of the preceding claims, wherein a plurality of carbon fibres (12) are provided for electrical transmission, especially for electrical signal transmission along the component.

5. Structural component (1) according to one of the preceding claims, wherein the at least one coated carbon fibre (12) has a small diameter in the order of some microns, preferred between 3 and 12 micrometers, in particular between 5 and 10 micrometers.

6. Structural component according to one of the preceding claims, wherein a composite laminate (10) built up of a plurality of layers (24) of carbon fibres (12) forms power source (30) to drive electrical signals over at least one electrical connection formed by at least one coated carbon fibre (12) extending through its layer (24) between ends of the layer (24) spaced apart from one another.

7. Method for providing a structural component, in particular a structural component (1) according to one of the preceding claims, comprising at least the following steps:
- providing a composite laminate (10) of carbon fibre layers (24) with at least one of which layers (24) containing at least one carbon fibre (12) coated with an electrically insulating and/or ion-transmissive coating (16) ;
- manufacture of the structural component (1);
- stripping insulation at the opposite ends (26) of at least one coated carbon fibre (12);
- connecting stripped ends (22) of the at least one carbon fibre (12) with signal processing means and/or power source (30);
- transmit/process signals.

8. Method according to claim 7, wherein the at least one coated carbon fibre (12) is provided as a carbon fibre yarn or tow coated with an electrically insulating polymer electrolyte.

9. Method according to claim 7 or 8, wherein a plurality of coated carbon fibres (12) is used and/or the electrical signals processed are coded digital data signals.

10. Aircraft comprising a structural component (1) according to one of the claims 1 to 6.

## Patentansprüche

1. Bauteil (1), umfassend:
ein Kompositlaminat (10), das aus einer Vielzahl von Schichten (24) von Kohlefasern (12) aufgebaut ist, wobei die Schichten (24) von Kohlefasern (12) in unterschiedlichen Richtungen orientiert sind, und wobei die Kohlefasern (12) von leitfähigem Polymerharz (14) umgeben sind;
wobei die Kohlefasern (12) von mindestens einer der Schichten (24) eine elektrisch isolierende Beschichtung (16) umfassen, und
wobei mindestens eine der beschichteten Kohlefasern (12) sich durch ihre jeweilige Schicht (24) hindurch erstreckt, um eine elektrische Verbindung zwischen Enden (26) der Schicht (24) zu bilden, die voneinander beabstandet sind.

2. Bauteil nach Anspruch 1, wobei abisolierte Endabschnitte (22) der mindestens einen beschichteten Faser (12) aus ihrem jeweiligen Ende (26) der Schicht (24) herausragen und mit mindestens einem Übertragungsmittel oder dessen Teilsatz verbindungsfähig oder verbunden sind.

3. Bauteil (1) nach Anspruch 2, wobei das Übertragungsmittel durch mindestens eine elektrische Schaltung (20) gebildet wird, die mit mindestens einer Leistungsquelle (30) und/oder mindestens einer Signalverarbeitungsvorrichtung verbindungsfähig ist.

4. Bauteil (1) nach einem der vorhergehenden Ansprüche, wobei eine Vielzahl von Kohlefasern (12) zur elektrischen Übertragung, insbesondere zur elektrischen Signalübertragung, entlang des Bauteils bereitgestellt wird.

5. Bauteil (1) nach einem der vorhergehenden Ansprüche, wobei die mindestens eine beschichtete Kohlefaser (12) einen kleinen Durchmesser in der Größenordnung von einigen Mikrometern aufweist, bevorzugt zwischen 3 und 12 Mikrometern, insbesondere zwischen 5 und 10 Mikrometern.

6. Bauteil nach einem der vorhergehenden Ansprüche, wobei ein Kompositlaminat (10), das aus einer Vielzahl von Schichten (24) aus Kohlefasern (12) aufgebaut ist, eine Leistungsquelle (30) bildet, um elektrische Signale über mindestens eine elektrische Verbindung zu treiben, die durch mindestens eine beschichtete Kohlefaser (12) gebildet ist, die sich durch ihre Schicht (24) hindurch zwischen Enden der Schicht (24) erstreckt, die voneinander beabstandet sind.

7. Verfahren zum Bereitstellen eines Bauteils, insbesondere eines Bauteils (1) gemäß einem der vorhergehenden Ansprüche, umfassend mindestens die folgenden Schritte:
- Bereitstellen eines Kompositlaminats (10) aus Kohlefaserschichten (24), wobei mindestens eine dieser Schichten (24) mindestens eine Kohlefaser (12) enthält, die mit einer elektrisch isolierenden und/oder ionenübertragungsfähigen Beschichtung (16) beschichtet ist;
- Fertigung des Bauteils (1);
- Abisolieren der Isolierung an den entgegengesetzten Enden (26) von mindestens einer beschichteten Kohlefaser (12);
- Verbinden der abisolierten Enden (22) der mindestens einen Kohlefaser (12) mit Signalverarbeitungsmitteln und/oder Leistungsquelle (30);
- Übertragen/Verarbeiten von Signalen.

8. Verfahren nach Anspruch 7, wobei die mindestens eine beschichtete Kohlefaser (12) als Kohlefasergarn oder -werg bereitgestellt wird, das mit einem elektrisch isolierenden Polymerelektrolyten beschichtet ist.

9. Verfahren nach Anspruch 7 oder 8, wobei eine Vielzahl von beschichteten Kohlefasern (12) verwendet wird und/oder die verarbeiteten elektrischen Signale codierte digitale Datensignale sind.

10. Luftfahrzeug, umfassend ein Bauteil (1) nach einem der Ansprüche 1 bis 6.

## Revendications

1. Composant structural (1) comprenant :
un stratifié composite (10) constitué d'une pluralité de couches (24) de fibres de carbone (12), les couches (24) de fibres de carbone (12) étant orientées dans différentes directions et les fibres de carbone (12) étant entourées par une résine polymère conductrice (14) ;
dans lequel les fibres de carbone (12) d'au moins une des couches (24) comprennent un enrobage électriquement isolant (16), et
dans lequel au moins une des fibres de carbone enrobées (12) s'étend à travers sa couche respective (24) pour former un raccordement électrique entre des extrémités (26) de la couche (24) espacées l'une de l'autre.

2. Composant structural selon la revendication 1, dans lequel des parties d'extrémité dénudées (22) de l'au moins une fibre enrobée (12) font saillie depuis leur extrémité respective (26) de la couche (24) et sont raccordables ou raccordées à au moins un moyen de transmission ou son sous-ensemble.

3. Composant structural (1) selon la revendication 2, dans lequel le moyen de transmission est constitué d'au moins un circuit électrique (20), qui est raccordable à au moins une source d'alimentation (30) et/ou au moins un dispositif de traitement du signal.

4. Composant structural (1) selon une des revendications précédentes, dans lequel une pluralité de fibres de carbone (12) sont prévues pour la transmission électrique, en particulier pour la transmission de signaux électriques le long du composant.

5. Composant structural (1) selon une des revendications précédentes, dans lequel l'au moins une fibre de carbone enrobée (12) a un petit diamètre, de l'ordre de quelques micromètres, de préférence entre 3 et 12 micromètres, en particulier entre 5 et 10 micromètres.

6. Composant structural selon une des revendications précédentes, dans lequel un stratifié composite (10) constitué d'une pluralité de couches (24) de fibres de carbone (12) forme une source d'alimentation (30) pour transmettre des signaux électriques sur au moins un raccordement électrique formé par au moins une fibre de carbone enrobée (12) s'étendant à travers sa couche (24) entre des extrémités de la couche (24) espacées l'une de l'autre.

7. Procédé d'obtention d'un composant structural, en particulier d'un composant structural (1) selon une des revendications précédentes, comprenant au moins les étapes suivantes :
- se procurer un stratifié composite (10) de couches de fibres de carbone (24) avec au moins une de ces couches (24) contenant au moins une fibre de carbone (12) enrobée avec un enrobage électriquement isolant et/ou ioniquement transmissif (16) ;
- fabriquer le composant structural (1) ;
- dénuder l'isolation aux extrémités opposées (26) d'au moins une fibre de carbone enrobée (12) ;
- raccorder des extrémités dénudées (22) de l'au moins une fibre de carbone (12) à un moyen de traitement du signal et/ou une source d'alimentation (30) ;
- transmettre/traiter des signaux.

8. Procédé selon la revendication 7, dans lequel l'au moins une fibre de carbone enrobée (12) est obtenue sous la forme d'un fil ou câble de fibres de carbone enrobé avec un électrolyte polymère électriquement isolant.

9. Procédé selon la revendication 7 ou 8, dans lequel une pluralité de fibres de carbone enrobées (12) est utilisée et/ou les signaux électriques traités sont des signaux de données numériques codées.

10. Aéronef comprenant un composant structural (1) selon une des revendications 1 à 6.
